# EUROPEAN PATENT APPLICATION

(11) **EP 3 460 672 A1**
(43) Date of publication of application: **27.03.2019**
(21) Application number: 16907908.4
(22) Date of filing: 08.07.2016
(51) Int. Cl.: G06F 15/16, B64D 47/00

(54) **AERIAL DATA BACKUP METHOD, APPARATUS, AND DEVICE FOR AIRCRAFT, AND COMPUTER READABLE STORAGE MEDIUM**

(71) Applicant: Autel Robotics Co., Ltd., Shenzhen, Guangdong 518055 (CN)
(72) Inventor: LIU, Yang, Shenzhen Guangdong 518055 (CN); PAN, Xiangxi, Shenzhen Guangdong 518055 (CN)
(74) Representative: Gulde & Partner
(86) International application number: PCT/CN2016/089379
(87) International publication number: WO 2018/006403

(57) **Abstract**

The present invention relates to the field of data backup technologies, and provides an aircraft aerial photography data backup method, apparatus and device, and a computer readable storage medium. The method is performed by a backup apparatus and includes: obtaining aerial photography data from a storage module of an aircraft; storing the obtained aerial photography data; and deleting the obtained aerial photography data from the storage module. In embodiments of the present invention, the aerial photography data is obtained from the storage module of the aircraft and is stored, to back up the data of the aircraft. The aerial photography data stored in the storage module of the aircraft is deleted, so that photographing can continue without replacing a memory card after storage of the storage module of the aircraft is full.

## Description

### Technical Field

The present invention relates to the field of data backup technologies, and in particular, to an aircraft aerial photography data backup method, apparatus and device, and a computer readable storage medium.

### Related Art

In an existing aircraft aerial photography solution (a camera, a video camera, or the like is adopted as a photographing apparatus), a memory card (for example, an SD card or a TF card) equipped on an aircraft body is used for storage. The memory card is generally inserted into a position of a card slot of the aircraft body. In the storage manner of using a memory card, a single memory card currently has a maximum storage capacity of 128 G and is relatively expensive. 30 frames/second-based video recording having a resolution of 4 K is used as an example. Video content of at least 8 megabytes is generated in each second, and a 16 GB memory card can be used only for photographing for approximately 30 minutes. Photographing can no longer be performed after the storage capacity of the memory card is reached, and the card needs to be replaced. As a result, a user needs to carry a plurality of memory cards, which is inconvenient.

In view of this, overcoming the defect of the prior art is a problem that urgently needs to be resolved in the technical field.

### SUMMARY

A technical problem that needs to be resolved in embodiments of the present invention is that in the prior art, photographing can no longer be performed after a storage capacity of a memory card is reached, and the card needs to be replaced.

The technical solutions adopted in the embodiments of the present invention are as follows:
According to a first aspect, an embodiment of the present invention provides an aircraft aerial photography data backup method. The method is performed by a backup apparatus, and includes:
obtaining aerial photography data from a storage module of an aircraft;
storing the obtained aerial photography data; and
deleting the obtained aerial photography data from the storage module.

The method further includes:
monitoring a data backup operation; and
the backup apparatus communicates with the aircraft in a wireless manner, and the monitoring a data backup operation includes:
   monitoring a pressing operation of a backup button in a wireless mode; or
   receiving a data backup request.

The deleting the obtained aerial photography data from the storage module includes:
sending an instruction for deleting the aerial photography data stored in the storage module to the aircraft; and
the monitoring a data backup operation includes:
   monitoring an operation of inserting the storage module to a memory card slot of the backup apparatus, where the storage module is a memory card; and
   the obtaining aerial photography data from a storage module of an aircraft includes:
      obtaining the aerial photography data from the memory card; or
      the monitoring a data backup operation includes:
         monitoring an operation of connecting the backup apparatus and the aircraft by using a USB data line; and
         the obtaining aerial photography data from a storage module of an aircraft includes:
            obtaining the aerial photography data from the storage module of the aircraft by using the USB data line.

According to a second aspect, an embodiment of the present invention provides an aircraft aerial photography data backup method. The method is performed by an aircraft, and includes:
sending aerial photography data in a storage module of the aircraft to a backup apparatus or a cloud server, so that the backup apparatus or the cloud server obtains and stores the aerial photography data; and
deleting the aerial photography data stored in the storage module.

The deleting the aerial photography data stored in the storage module includes:
receiving an instruction for deleting the aerial photography data stored in the storage module; and
deleting the aerial photography data according to the instruction.

The storage module is a memory card, and the sending aerial photography data in a storage module of the aircraft to a backup apparatus or a cloud server, so that the backup apparatus or the cloud server obtains and stores the aerial photography data includes:
sending the aerial photography data in the memory card of the aircraft to the backup apparatus or the cloud server, so that the backup apparatus or the cloud server obtains and stores the aerial photography data; or
the sending aerial photography data in a storage module of the aircraft to a backup apparatus or a cloud server, so that the backup apparatus or the cloud server obtains and stores the aerial photography data includes:
   sending the aerial photography data in the storage module of the aircraft to the backup apparatus by using a USB data line, so that the backup apparatus obtains and stores the aerial photography data, where the USB data line connects the backup apparatus and the aircraft.

According to a third aspect, an embodiment of the present invention provides an aircraft aerial photography data backup apparatus. The apparatus is applied to a backup device, and includes:
a data obtaining module, configured to obtain aerial photography data from a storage module of an aircraft;
a data storage module, configured to store the obtained aerial photography data; and
a first data deletion module, configured to delete the obtained aerial photography data from the storage module.

The apparatus further includes:
a monitoring module, configured to monitor a data backup operation.
the backup apparatus communicates with the aircraft in a wireless manner, and the monitoring module is configured to:
   monitor a pressing operation of a backup button in a wireless mode; or
   receive a data backup request.

The first data deletion module is configured to:
send an instruction for deleting the aerial photography data stored in the storage module to the aircraft.

The monitoring module is configured to:
monitor an operation of inserting the storage module to a memory card slot of the backup apparatus, where the storage module is a memory card; and
the data obtaining module is configured to:
   obtain the aerial photography data from the memory card; or
   the monitoring module is configured to:
      monitor an operation of connecting the backup apparatus and the aircraft by using a USB data line; and
      the data obtaining module is configured to:
         obtain the aerial photography data from the storage module of the aircraft by using the USB data line.

According to a fourth aspect, an embodiment of the present invention provides an aircraft aerial photography data backup apparatus. The apparatus is applied to an aircraft, and includes:
a data sending module, configured to send aerial photography data in a storage module of the aircraft to the backup apparatus or a cloud server, so that the backup apparatus or the cloud server obtains and stores the aerial photography data; and
a second data deletion module, configured to delete the aerial photography data stored in the storage module.

The second data deletion module includes:
an instruction receiving unit, configured to receive an instruction for deleting the aerial photography data stored in the storage module; and a data deletion unit, configured to delete the aerial photography data according to the instruction.

The storage module is a memory card, and the data sending module is configured to:
send the aerial photography data in the memory card of the aircraft to the backup apparatus or the cloud server, so that the backup apparatus or the cloud server obtains and stores the aerial photography data; or
the data sending module is configured to:
   send the aerial photography data in the storage module of the aircraft to the backup apparatus by using a USB data line, so that the backup apparatus obtains and stores the aerial photography data, where the USB data line connects the backup apparatus and the aircraft.

According to a fifth aspect, an embodiment of the present invention provides a computer readable storage medium, including an instruction used to perform the aircraft aerial photography data backup method according to the first aspect of the embodiments of the present invention.

According to a sixth aspect, an embodiment of the present invention provides a computer readable storage medium, including an instruction used to perform the aircraft aerial photography data backup method according to the second aspect of the embodiments of the present invention.

According to a seventh aspect, an embodiment of the present invention provides an aircraft aerial photography data backup device, including a processor, a memory and a bus system, where the processor is connected to the memory by using the bus system;
the memory is configured to store an instruction; and
the processor is configured to execute the instruction stored in the memory, and the instruction is used to perform the aircraft aerial photography data backup method according to the first aspect of the embodiments of the present invention.

According to an eighth aspect, an embodiment of the present invention provides an aircraft aerial photography data backup device, including a processor, a memory and a bus system, where the processor is connected to the memory by using the bus system;
the memory is configured to store an instruction; and
the processor is configured to execute the instruction stored in the memory, and the instruction is used to perform the aircraft aerial photography data backup method according to the second aspect of the embodiments of the present invention.

Beneficial effects of the embodiments of the present invention are as follows: The aerial photography data is obtained from the storage module of the aircraft and is stored, to back up the data of the aircraft. The aerial photography data stored in the storage module of the aircraft is deleted, so that photographing can continue without replacing a memory card after storage of the storage module of the aircraft is full.

### BRIEF DESCRIPTION OF THE DRAWINGS

FIG. 1 is a flowchart of an aircraft aerial photography data backup method according to an embodiment of the present invention;
FIG. 2 is a flowchart of an aircraft aerial photography data backup method according to some embodiments of the present invention;
FIG. 3 is a schematic diagram of an application according to some embodiments of the present invention;
FIG. 4 is a schematic diagram of an application according to some embodiments of the present invention;
FIG. 5 is a schematic diagram of an application according to some embodiments of the present invention;
FIG. 6 is a schematic diagram of an application according to some embodiments of the present invention;
FIG. 7 is a flowchart of an aircraft aerial photography data backup method according to an embodiment of the present invention;
FIG. 8 is a block diagram of an aircraft aerial photography data backup apparatus according to an embodiment of the present invention;
FIG. 9 is a block diagram of an aircraft aerial photography data backup apparatus according to an embodiment of the present invention;
FIG. 10 is a block diagram of an aircraft aerial photography data backup device according to an embodiment of the present invention; and
FIG. 11 is a block diagram of an aircraft aerial photography data backup device according to an embodiment of the present invention.

### DETAILED DESCRIPTION

To make objectives, technical solutions and advantages of the present invention more understandable and comprehensible, the present invention is further described in detail below with reference to the accompanying drawings and embodiments. It should be understood that, specific embodiments described herein are merely used for explaining the present invention, but not used for limiting the present invention.

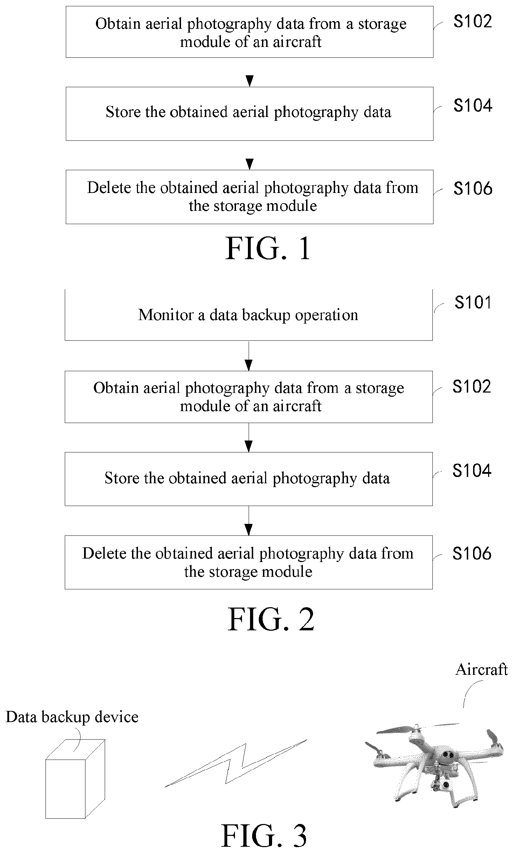

As shown in FIG. 1, an embodiment of the present invention provides an aircraft aerial photography data backup method. The method is performed by a backup apparatus, and the backup apparatus may obtain, from an aircraft, aerial photography data captured by the aircraft and store the aerial photography data for backup. The method includes the following steps:
S102: Obtain aerial photography data from a storage module of an aircraft.

In this step, the stored transmission data is obtained from the storage module of the aircraft, and all or a part of the transmission data may be obtained according to a setting. The storage module may be a memory card (for example, an SD card or a TF card).

S104: Store the obtained aerial photography data.

After the aerial photography data is obtained, the aerial photography data may be stored in the backup apparatus, or may be stored in a network server (for example, a cloud server) by using a wireless network. When the data is stored in the backup apparatus, the data may be stored in a large-capacity storage medium such as a hard disk of the backup apparatus. The hard disk may be a hard disk drive or a solid-state drive (SSD). When the data is stored in the cloud server, a wireless communication function of the aircraft needs to be used, and the data is obtained and stored by using a wireless network between the aircraft and the cloud server.

S106: Delete the obtained aerial photography data from the storage module.

To enable the aircraft to continue to perform aerial photography without replacing the storage module, after the aerial photography data is backed up, the aerial photography data already transmitted to the backup apparatus and stored further needs to be deleted from the aircraft.

In some embodiments, this step is implemented by sending an instruction for deleting the aerial photography data stored in the storage module to the aircraft.

Aerial photography storage generally conforms to Design rule for Camera File system (DCF). In this embodiment, the aerial photography data such as corresponding videos and pictures is moved to the backup apparatus also according to the foregoing rule. A standard protocol such as Hypertext Transfer Protocol (HTTP), File Transfer Protocol (FTP) or SAMBA may generally be used as a data file transmission protocol.

In the embodiments of the present invention, the aerial photography data is obtained from the storage module of the aircraft and is stored, to back up the data of the aircraft. The aerial photography data stored in the storage module of the aircraft is deleted, so that photographing can continue without replacing a memory card after storage of the storage module of the aircraft is full.

In some embodiments, as shown in FIG. 2, the method further includes:
S101: Monitor a data backup operation.

This step is preferably performed before step S102. When the data backup operation is detected, the aerial photography data is obtained from the storage module of the aircraft.

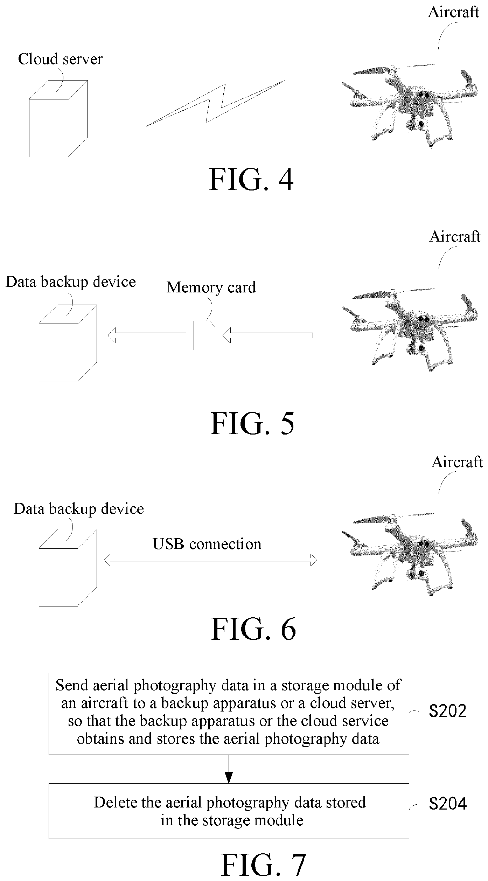

Backup may be performed in a plurality of manners. For example, data backup is performed between the backup apparatus and the aircraft by wireless communication transmission, data backup is performed between the cloud server and the aircraft by wireless communication transmission, data backup is performed by inserting a memory card (for example, an SD card or a TF card) of the aircraft to a card slot of the backup apparatus, or data backup is performed between the aircraft and the backup apparatus by using a USB connection. Therefore, there may be a plurality of backup operation instructions, including: pressing a backup button in a wireless mode on the backup apparatus, inserting the memory card to a memory card slot of the backup apparatus, a USB port of the aircraft is connected to a USB port of the backup apparatus and the like. In this step, the monitoring a data backup operation includes:
(1) Monitor a pressing operation of a backup button in a wireless mode.
   When the backup apparatus communicates with the aircraft in a wireless manner, this manner may be used. FIG. 3 is a schematic diagram of an application in this manner. When a stored data amount in the storage module of the aircraft exceeds a preset warning line, a user is prompted that a capacity will be reached. In this case, the user may press the backup button in the wireless mode on the backup apparatus. The deleting the obtained aerial photography data from the storage module may alternatively be deleting, by using wireless communication, the aerial photography data in the aircraft already transmitted to the backup apparatus and stored.
   In this manner, the aerial photography data is obtained from the storage module of the aircraft and is stored in the backup apparatus, to back up the data of the aircraft. The aerial photography data stored in the storage module of the aircraft is deleted, so that after storage of the storage module of the aircraft is full, the aircraft does not need to land on the ground to manually export the aerial photography data and manually delete the aerial photography data or replace the storage module, to continue photographing. Therefore, photographing is continuously performed while the aircraft keeps flying in the air. The entire backup process is applicable to any state of the aircraft, including a state of flying in the air, a standby state on the ground and the like.
(2) Receive a data backup request.
   When data is backed up in the cloud server, this manner may be used. FIG. 4 is a schematic diagram of an application in this manner. A user may send the data backup request by using an application program on a mobile terminal, or send the data backup request by using a button on the backup apparatus. After the cloud server receives the data backup request, a subsequent backup operation is performed. The deleting the obtained aerial photography data from the storage module may alternatively be deleting, by using wireless communication, the aerial photography data in the aircraft already transmitted to the cloud server and stored.
   In this manner, the aerial photography data is obtained from the storage module of the aircraft and is stored in the cloud server, to back up the data of the aircraft. The aerial photography data stored in the storage module of the aircraft is deleted, so that after storage of the storage module of the aircraft is full, the aircraft does not need to land on the ground to manually export the aerial photography data and manually delete the aerial photography data or replace the storage module, to continue photographing. Therefore, photographing is continuously performed while the aircraft keeps flying in the air. The entire backup process is applicable to any state of the aircraft, including a state of flying in the air, a standby state on the ground and the like.
(3) Monitor an operation of inserting the storage module to a memory card slot of the backup apparatus, where the storage module is a memory card.
   FIG. 5 is a schematic diagram of an application in this manner. When a stored data amount in the memory card of the aircraft exceeds a preset warning line, a user is prompted that a capacity will be reached. In this case, the user may operate the aircraft to land, take out the memory card in the aircraft, and insert the memory card to the card slot of the backup apparatus. The aerial photography data is subsequently obtained from the memory card of the aircraft. The deleting the obtained aerial photography data from the storage module may be alternatively deleting, by using electrical connections among the memory card, the card slot and a processor of the backup apparatus, the aerial photography data in the memory card of the aircraft already transmitted to the backup apparatus and stored.
   In this manner, the aerial photography data is obtained from the storage module of the aircraft and is stored, to back up the data of the aircraft. The aerial photography data stored in the storage module of the aircraft is deleted, so that photographing can continue without replacing a memory card after storage of the storage module of the aircraft is full.
(4) Monitor an operation of connecting the backup apparatus and the aircraft by using a USB data line.

FIG. 6 is a schematic diagram of an application in this manner. When a stored data amount in the memory card of the aircraft exceeds a preset warning line, a user is prompted that a capacity will be reached. In this case, the user may operate the aircraft to land and connect the backup apparatus and the aircraft by using a USB connection line. In this step, data transmission between the aircraft and the backup apparatus may be implemented by simulating a wired network by a USB, or by using Mass Storage Device Protocol (USB mass storage device protocol is applied to a large-capacity storage device such as a hard disk or a USB flash drive), Media Transfer Protocol (MTP) or the like. The backup apparatus is used as a USB primary device (Host), and the aircraft is used as a USB secondary device (slave). Subsequently, the aerial photography data is obtained from the storage module of the aircraft by using the USB data line. The deleting the obtained aerial photography data from the storage module may alternatively be implemented by a USB connection by deleting the aerial photography data in the memory card of the aircraft already transmitted to the backup apparatus and stored.

In this manner, the aerial photography data is obtained from the storage module of the aircraft and is stored, to back up the data of the aircraft. The aerial photography data stored in the storage module of the aircraft is deleted, so that photographing can continue without replacing a memory card after storage of the storage module of the aircraft is full.

As shown in FIG. 7, an embodiment of the present invention provides an aircraft aerial photography data backup method. The method is performed by an aircraft, and aerial photography data of the aircraft may be backed up to a backup apparatus or a cloud server. The method includes the following steps:
S202: Send aerial photography data in a storage module of the aircraft to a backup apparatus or a cloud server, so that the backup apparatus or the cloud server obtains and stores the aerial photography data.

When the backup apparatus or the cloud server sends a backup request, the aerial photography data in the storage module of the aircraft is sent to the backup apparatus or the cloud server, to back up the data to the backup apparatus or the cloud server. The storage module may be a memory card (for example, an SD card or a TF card).

The aerial photography data may be stored in the backup apparatus or may be stored in a network server (for example, a cloud server) by using a wireless network. When the data is stored in the backup apparatus, the data may be stored in a large-capacity storage medium such as a hard disk of the backup apparatus. The hard disk may be a hard disk drive or a solid-state drive (SSD). When the data is stored in the cloud server, a wireless communication function of the aircraft needs to be used, and the data is obtained and stored by using a wireless network between the aircraft and the cloud server.

S204: Delete the aerial photography data stored in the storage module.

To enable the aircraft to continue to perform aerial photography without replacing the storage module, after the aerial photography data is backed up, the aerial photography data already transmitted to the backup apparatus and stored further needs to be deleted from the aircraft. In this step, after a deletion instruction is received, the aerial photography data is deleted from the aircraft.

Aerial photography storage generally conforms to Design rule For Camera file system (DCF). In this embodiment, the aerial photography data such as corresponding videos and pictures is moved to the backup apparatus also according to the foregoing rule. A standard protocol such as Hypertext Transfer Protocol (HTTP), File Transfer Protocol (FTP) or SAMBA may generally be used as a data file transmission protocol.

In the embodiments of the present invention, the aerial photography data is obtained from the storage module of the aircraft and is stored, to back up the data of the aircraft. The aerial photography data stored in the storage module of the aircraft is deleted, so that photographing can continue without replacing a memory card after storage of the storage module of the aircraft is full.

In some embodiments, step S204 includes:
S2042: Receive an instruction for deleting the aerial photography data stored in the storage module.

The deletion instruction is sent by the backup apparatus or the cloud server.

S2044: Delete the aerial photography data according to the instruction.

The data is deleted from the aircraft according to the instruction.

In some embodiments, backup may be performed in a plurality of manners. For example, data backup is performed between the backup apparatus and the aircraft by wireless communication transmission, data backup is performed between the cloud server and the aircraft by wireless communication transmission, data backup is performed by inserting a memory card (for example, an SD card or a TF card) of the aircraft to a card slot of the backup apparatus, or data backup is performed between the aircraft and the backup apparatus by using a USB connection. Therefore, there may be a plurality of backup operation instructions, including: pressing a backup button in a wireless mode on the backup apparatus, inserting the memory card to a memory card slot of the backup apparatus, a USB port of the aircraft is connected to a USB port of the backup apparatus and the like. Step S202 includes:
(1) Send aerial photography data in a storage module of the aircraft to a backup apparatus by using wireless communication, so that the backup apparatus obtains and stores the aerial photography data.
   When the backup apparatus communicates with the aircraft in a wireless manner, this manner may be used. FIG. 3 is a schematic diagram of an application in this manner. When a stored data amount in the storage module of the aircraft exceeds a preset warning line, a user is prompted that a capacity will be reached. In this case, the user may press the backup button in the wireless mode on the backup apparatus. The deleting the obtained aerial photography data from the storage module may alternatively be deleting, by using wireless communication, the aerial photography data in the aircraft already transmitted to the backup apparatus and stored.
   In this manner, the aerial photography data is obtained from the storage module of the aircraft and is stored in the backup apparatus, to back up the data of the aircraft. The aerial photography data stored in the storage module of the aircraft is deleted, so that after storage of the storage module of the aircraft is full, the aircraft does not need to land on the ground to manually export the aerial photography data and manually delete the aerial photography data or replace the storage module, to continue photographing. Therefore, photographing is continuously performed while the aircraft keeps flying in the air. The entire backup process is applicable to any state of the aircraft, including a state of flying in the air, a standby state on the ground and the like.
(2) Send aerial photography data in a storage module of the aircraft to a network server by using wireless communication, so that the network server obtains and stores the aerial photography data.
   When data is backed up to the network server (for example, a cloud server), this manner may be used. FIG. 4 is a schematic diagram of an application in this manner. A user may send the data backup request by using an application program on a mobile terminal, or send the data backup request by using a button on the backup apparatus. After the cloud server receives the data backup request, a subsequent backup operation is performed. The deleting the obtained aerial photography data from the storage module may alternatively be deleting, by using wireless communication, the aerial photography data in the aircraft already transmitted to the cloud server and stored.
   In this manner, the aerial photography data is obtained from the storage module of the aircraft and is stored in the cloud server, to back up the data of the aircraft. The aerial photography data stored in the storage module of the aircraft is deleted, so that after storage of the storage module of the aircraft is full, the aircraft does not need to land on the ground to manually export the aerial photography data and manually delete the aerial photography data or replace the storage module, to continue photographing. Therefore, photographing is continuously performed while the aircraft keeps flying in the air. The entire backup process is applicable to any state of the aircraft, including a state of flying in the air, a standby state on the ground and the like.
(3) Send aerial photography data in a memory card of the aircraft to a backup apparatus, so that the backup apparatus obtains and stores the aerial photography data.
   FIG. 5 is a schematic diagram of an application in this manner. When a stored data amount in the memory card of the aircraft exceeds a preset warning line, a user is prompted that a capacity will be reached. In this case, the user may operate the aircraft to land, take out the memory card in the aircraft, and insert the memory card to the card slot of the backup apparatus. The aerial photography data is subsequently obtained from the memory card of the aircraft. The deleting the obtained aerial photography data from the storage module may be alternatively deleting, by using electrical connections among the memory card, the card slot, and a processor of the backup apparatus, the aerial photography data in the memory card of the aircraft already transmitted to the backup apparatus and stored.
   In this manner, the aerial photography data is obtained from the storage module of the aircraft and is stored, to back up the data of the aircraft. The aerial photography data stored in the storage module of the aircraft is deleted, so that photographing can continue without replacing a memory card after storage of the storage module of the aircraft is full.
(4) Send the aerial photography data in the storage module of the aircraft to the backup apparatus by using a USB data line, so that the backup apparatus obtains and stores the aerial photography data, where the USB data line connects the backup apparatus and the aircraft.

FIG. 6 is a schematic diagram of an application in this manner. When a stored data amount in the memory card of the aircraft exceeds a preset warning line, a user is prompted that a capacity will be reached. In this case, the user may operate the aircraft to land and connect the backup apparatus and the aircraft by using a USB connection line. In this step, data transmission between the aircraft and the backup apparatus may be implemented by simulating a wired network by a USB, or by using mass storage device protocol (USB mass storage device protocol is applied to a large-capacity storage device such as a hard disk or a USB flash drive), Media Transfer Protocol (MTP), or the like. The backup apparatus is used as a USB primary device (Host), and the aircraft is used as a USB secondary device (slave). Subsequently, the aerial photography data is obtained from the storage module of the aircraft by using the USB data line. The deleting the obtained aerial photography data from the storage module may alternatively be implemented by a USB connection by deleting the aerial photography data in the memory card of the aircraft already transmitted to the backup apparatus and stored.

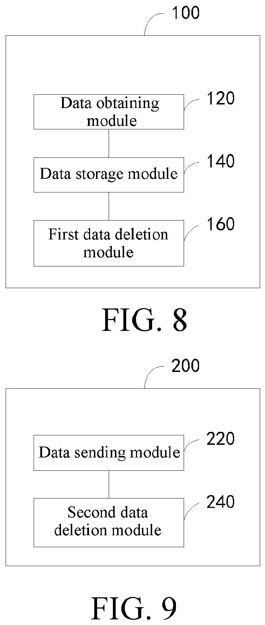

In this manner, the aerial photography data is obtained from the storage module of the aircraft and is stored, to back up the data of the aircraft. The aerial photography data stored in the storage module of the aircraft is deleted, so that photographing can continue without replacing a memory card after storage of the storage module of the aircraft is full. As shown in FIG. 8, an embodiment of the present invention provides an aircraft aerial photography data backup apparatus 100. The apparatus is applied to a backup device, and the backup apparatus may obtain, from an aircraft, aerial photography data captured by the aircraft and store the aerial photography data for backup. The apparatus includes:
a data obtaining module 120, configured to obtain aerial photography data from a storage module of an aircraft;
a data storage module 140, configured to store the obtained aerial photography data; and
a first data deletion module 160, configured to delete the obtained aerial photography data from the storage module.

In some embodiments, the apparatus further includes a monitoring module, configured to monitor a data backup operation.

After the aerial photography data is obtained, the aerial photography data may be stored in the backup apparatus, or may be stored in a network server (for example, a cloud server) by using a wireless network. In some embodiments, the backup apparatus communicates with the aircraft in a wireless manner, and when the data is stored in the backup apparatus, the monitoring module is configured to monitor a pressing operation of a backup button in a wireless mode. In some other embodiments, the backup apparatus communicates with the aircraft in a wireless manner, and when the data is stored in the cloud server, the monitoring module is configured to receive a data backup request.

In some embodiments, the first data deletion module is configured to send an instruction for deleting the aerial photography data stored in the storage module to the aircraft.

In some embodiments, the monitoring module is configured to monitor an operation of inserting the storage module to a memory card slot of the backup apparatus, where the storage module is a memory card; and the data obtaining module is configured to obtain the aerial photography data from the memory card.

In some embodiments, the monitoring module is configured to monitor an operation of connecting the backup apparatus and the aircraft by using a USB data line; and the data obtaining module is configured to obtain the aerial photography data from the storage module of the aircraft by using the USB data line.

Content such as information exchange and execution processes of the modules and units of the apparatus and the method embodiments of the present invention are based on a same idea. For specific content, refer to descriptions in the method embodiments of the present invention, and details are not described herein again.

In the embodiments of the present invention, the aerial photography data is obtained from the storage module of the aircraft and is stored, to back up the data of the aircraft. The aerial photography data stored in the storage module of the aircraft is deleted, so that photographing can continue without replacing a memory card after storage of the storage module of the aircraft is full.

As shown in FIG. 9, an embodiment of the present invention provides an aircraft aerial photography data backup apparatus 200. The apparatus is applied to an aircraft, and aerial photography data of the aircraft may be backed up to the backup apparatus or a cloud server. The apparatus includes:
a data sending module 220, configured to send aerial photography data in a storage module of the aircraft to a backup apparatus, so that the backup apparatus obtains and stores the aerial photography data; and
a second data deletion module 240, configured to delete the aerial photography data stored in the storage module.

In some embodiments, the second data deletion module 240 includes:
an instruction receiving unit, configured to receive an instruction for deleting the aerial photography data stored in the storage module; and
a data deletion unit, configured to delete the aerial photography data according to the instruction.

In some embodiments, the storage module is a memory card; and the data sending module 220 is configured to send the aerial photography data in the memory card of the aircraft to the backup apparatus, so that the backup apparatus obtains and stores the aerial photography data.

In some embodiments, the data sending module 220 is configured to send the aerial photography data in the storage module of the aircraft to the backup apparatus by using a USB data line, so that the backup apparatus obtains and stores the aerial photography data, where the USB data line connects the backup apparatus and the aircraft.

Content such as information exchange and execution processes of the modules and units of the apparatus and the method embodiments of the present invention are based on a same idea. For specific content, refer to descriptions in the method embodiments of the present invention, and details are not described herein again.

In the embodiments of the present invention, the aerial photography data is obtained from the storage module of the aircraft and is stored, to back up the data of the aircraft. The aerial photography data stored in the storage module of the aircraft is deleted, so that photographing can continue without replacing a memory card after storage of the storage module of the aircraft is full.

An embodiment of the present invention provides a computer readable storage medium, including an instruction used to perform the aircraft aerial photography data backup method performed by a backup apparatus according to the foregoing embodiments.

In the embodiments of the present invention, the aerial photography data is obtained from the storage module of the aircraft and is stored, to back up the data of the aircraft. The aerial photography data stored in the storage module of the aircraft is deleted, so that photographing can continue without replacing a memory card after storage of the storage module of the aircraft is full.

An embodiment of the present invention provides a computer readable storage medium, including an instruction used to perform the aircraft aerial photography data backup method performed by an aircraft according to the foregoing embodiments.

In the embodiments of the present invention, the aerial photography data is obtained from the storage module of the aircraft and is stored, to back up the data of the aircraft. The aerial photography data stored in the storage module of the aircraft is deleted, so that photographing can continue without replacing a memory card after storage of the storage module of the aircraft is full.

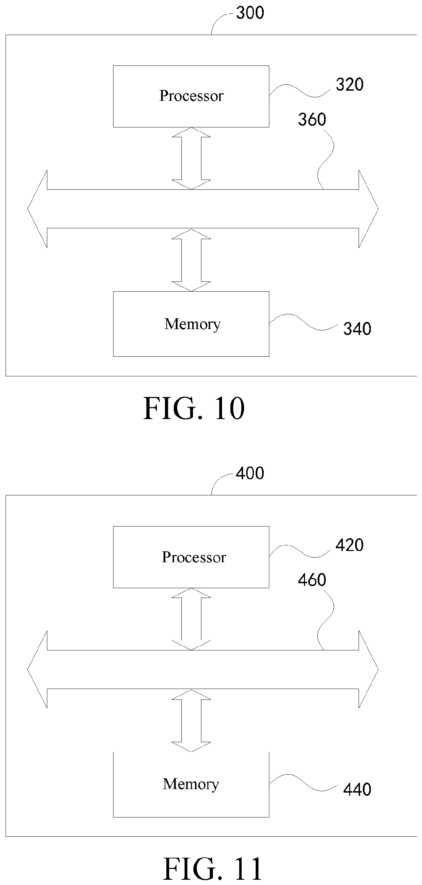

As shown in FIG. 10, an embodiment of the present invention provides an aircraft aerial photography data backup device 300, including a processor 320, a memory 340 and a bus system 360. The processor 320 is connected to the memory 340 by using the bus system 360. The memory 340 is configured to store an instruction. The processor 320 is configured to execute the instruction stored by the memory 340. The instruction is used to perform the aircraft aerial photography data backup method performed by a backup apparatus according to the foregoing embodiments. The method includes:
obtaining aerial photography data from a storage module of an aircraft;
storing the obtained aerial photography data; and
deleting the obtained aerial photography data from the storage module.

The memory 340 of the aircraft aerial photography data backup device 300 may be a non-volatile computer readable storage medium, and is configured to store a computer executable instruction. When the instruction is executed by one or more processors, the processor may be caused to perform the steps in the foregoing method embodiments, for example, steps 102 to 106 shown in FIG. 1, or steps 101 to 106 shown in FIG. 2, or the processor may be caused to perform functions of the modules in the apparatus embodiments, for example, functions of modules 120 to 160 shown in FIG. 8. The computer executable instruction may alternatively be stored and/or transmitted in any non-volatile computer readable storage medium, to be used by an instruction execution system, apparatus or device, or to be used in combination with an instruction execution system, apparatus or device. The instruction execution system, apparatus or device is, for example, a system based on a computer, a system including a processor or another system that may obtain an instruction from the instruction execution system, apparatus or device and execute the instruction. For purpose of this specification, a "non-volatile computer readable storage medium" may be any medium that may visibly include or store a computer executable instruction. The computer executable instruction may be used by an instruction execution system, device or system or used in combination with an instruction execution system, apparatus or device. The non-volatile computer readable storage medium may include, but is not limited to, a magnetic, light and/or semiconductor storage apparatus. Examples of the storage apparatuses include a magnetic disk, an optic disc based on a CD, a DVD, or a Blu-ray technology and a permanent solid-state memory (for example, a flash memory or a solid-state drive).

It should be understood that in this embodiment of the present application, the processor 320 may be a central processing unit (CPU). The processor 320 may alternatively be another general-purpose processor, a digital signal processor (DSP), an application-specific integrated circuit (ASIC), a field programmable gate array (FPGA) or another programmable logical device, a discrete gate or transistor logic device, a discrete hardware component and the like. The general-purpose processor may be a microprocessor or the processor may be any conventional processor or the like.

The bus system 360 may further include a power supply bus, a control bus, a status signal bus and the like in addition to a data bus. However, for the purpose of description clarity, various buses are all marked as the bus system 360 in the figure.

In this embodiment of the present invention, the aircraft aerial photography data backup device 300 is not limited to the components and configurations in FIG. 10, and may further include other or additional components in a plurality of configuration forms.

In an implementation process, the steps of the methods or the modules of the apparatuses may be performed by a hardware integrated logic circuit in the processor 320 or an instruction in a form of software. The steps of the methods or the units of the apparatuses disclosed in the embodiments of the present application may be directly implemented by a hardware processor, or implemented by a combination of hardware and software modules in the processor. The software module may be located in a mature storage medium in the art such as a random access memory, a flash memory, a read-only memory, a programmable read-only memory, an electrically erasable programmable memory, or a register. The storage medium is located in the memory 340, and the processor 320 reads information in the memory 340 and executes the steps in the methods in combination with hardware thereof. Details are not described herein again to avoid repetition.

In the embodiments of the present invention, the aerial photography data is obtained from the storage module of the aircraft and is stored, to back up the data of the aircraft. The aerial photography data stored in the storage module of the aircraft is deleted, so that photographing can continue without replacing a memory card after storage of the storage module of the aircraft is full.

As shown in FIG. 11, an embodiment of the present invention provides an aircraft aerial photography data backup device 400, including a processor 420, a memory 440 and a bus system 460. The processor 420 is connected to the memory 440 by using the bus system 460. The memory 440 is configured to store an instruction. The processor 420 is configured to execute the instruction stored by the memory 440. The instruction is used to perform the aircraft aerial photography data backup method performed by an aircraft according to the foregoing embodiments. The method includes:
sending aerial photography data in a storage module of the aircraft to a backup apparatus or a cloud server, so that the backup apparatus or the cloud server obtains and stores the aerial photography data; and
deleting the aerial photography data stored in the storage module.

The memory 440 of the aircraft aerial photography data backup device 400 may be a non-volatile computer readable storage medium, and is configured to store a computer executable instruction. When the instruction is executed by one or more processors, the processor may be caused to perform the steps in the foregoing method embodiments, for example, steps 202 to 204 shown in FIG. 7, or the processor may be caused to perform functions of the modules in the apparatus embodiments, for example, functions of the modules 220 to 240 shown in FIG. 9. The computer executable instruction may alternatively be stored and/or transmitted in any non-volatile computer readable storage medium, to be used by an instruction execution system, apparatus or device, or to be used in combination with an instruction execution system, apparatus, or device. The instruction execution system, apparatus or device is, for example, a system based on a computer, a system including a processor or another system that may obtain an instruction from the instruction execution system, apparatus or device and execute the instruction. For purpose of this specification, a "non-volatile computer readable storage medium" may be any medium that may visibly include or store a computer executable instruction. The computer executable instruction may be used by an instruction execution system, device or system or used in combination with an instruction execution system, apparatus or device. The non-volatile computer readable storage medium may include, but is not limited to, a magnetic, light and/or semiconductor storage apparatus. Examples of the storage apparatuses include a magnetic disk, an optic disc based on a CD, a DVD, or a Blu-ray technology and a permanent solid-state memory (for example, a flash memory or a solid-state drive).

It should be understood that in this embodiment of the present application, the processor 420 may be a central processing unit (CPU). The processor 420 may alternatively be another general-purpose processor, a digital signal processor (DSP), an application-specific integrated circuit (ASIC), a field programmable gate array (FPGA) or another programmable logical device, a discrete gate or transistor logic device, a discrete hardware component and the like. The general-purpose processor may be a microprocessor or the processor may be any conventional processor or the like.

The bus system 460 may further include a power supply bus, a control bus, a status signal bus and the like in addition to a data bus. However, for the purpose of description clarity, various buses are all marked as the bus system 460 in the figure.

In this embodiment of the present invention, the aircraft aerial photography data backup device 400 is not limited to the components and configurations in FIG. 11, and may further include other or additional components in a plurality of configuration forms.

In an implementation process, the steps of the methods or the modules of the apparatuses may be performed by a hardware integrated logic circuit in the processor 420 or an instruction in a form of software. The steps of the methods or the units of the apparatuses disclosed in the embodiments of the present application may be directly implemented by a hardware processor, or implemented by a combination of hardware and software modules in the processor. The software module may be located in a mature storage medium in the art such as a random access memory, a flash memory, a read-only memory, a programmable read-only memory, an electrically erasable programmable memory, or a register. The storage medium is located in the memory 440, and the processor 420 reads information in the memory 440 and executes the steps in the methods in combination with hardware thereof. Details are not described herein again to avoid repetition.

In the embodiments of the present invention, the aerial photography data is obtained from the storage module of the aircraft and is stored, to back up the data of the aircraft. The aerial photography data stored in the storage module of the aircraft is deleted, so that photographing can continue without replacing a memory card after storage of the storage module of the aircraft is full.

The foregoing descriptions are only embodiments of the present invention, and are not intended to limit the patent scope of the present invention. Equivalent structures or equivalent procedure changes made by using the specification and accompanying drawings of the present invention, or direct or indirect application to other related technical fields are similarly included in the patent protection scope of the present invention.

## Claims

1. An aircraft aerial photography data backup method, the method being performed by a backup apparatus, and comprising:
obtaining aerial photography data from a storage module of an aircraft;
storing the obtained aerial photography data; and
deleting the obtained aerial photography data from the storage module.

2. The method according to claim 1, further comprising:
monitoring a data backup operation.

3. The method according to claim 2, wherein the backup apparatus communicates with the aircraft in a wireless manner, and the monitoring a data backup operation comprises:
monitoring a pressing operation of a backup button in a wireless mode; or
receiving a data backup request.

4. The method according to claim 3, wherein the deleting the obtained aerial photography data from the storage module comprises:
sending an instruction for deleting the aerial photography data stored in the storage module to the aircraft.

5. The method according to claim 2, wherein the monitoring a data backup operation comprises:
monitoring an operation of inserting the storage module to a memory card slot of the backup apparatus, wherein the storage module is a memory card; and
the obtaining aerial photography data from a storage module of an aircraft comprises:
obtaining the aerial photography data from the memory card; or
the monitoring a data backup operation comprises:
monitoring an operation of connecting the backup apparatus and the aircraft by using a USB data line; and
the obtaining aerial photography data from a storage module of an aircraft comprises:
obtaining the aerial photography data from the storage module of the aircraft by using the USB data line.

6. An aircraft aerial photography data backup method, the method being performed by an aircraft, and comprising:
sending aerial photography data in a storage module of the aircraft to a backup apparatus or a cloud server, so that the backup apparatus or the cloud server obtains and stores the aerial photography data; and
deleting the aerial photography data stored in the storage module.

7. The method according to claim 6, wherein the deleting the aerial photography data stored in the storage module comprises:
receiving an instruction for deleting the aerial photography data stored in the storage module; and
deleting the aerial photography data according to the instruction.

8. The method according to claim 6, wherein the storage module is a memory card, and the sending aerial photography data in a storage module of the aircraft to a backup apparatus or a cloud server, so that the backup apparatus or the cloud server obtains and stores the aerial photography data comprises:
sending the aerial photography data in the memory card of the aircraft to the backup apparatus or the cloud server, so that the backup apparatus or the cloud server obtains and stores the aerial photography data; or
the sending aerial photography data in a storage module of the aircraft to a backup apparatus or a cloud server, so that the backup apparatus or the cloud server obtains and stores the aerial photography data comprises:
sending the aerial photography data in the storage module of the aircraft to the backup apparatus by using a USB data line, so that the backup apparatus obtains and stores the aerial photography data, wherein the USB data line connects the backup apparatus and the aircraft.

9. An aircraft aerial photography data backup apparatus, the apparatus being applied to a backup device, and comprising:
a data obtaining module, configured to obtain aerial photography data from a storage module of an aircraft;
a data storage module, configured to store the obtained aerial photography data; and
a first data deletion module, configured to delete the obtained aerial photography data from the storage module.

10. The apparatus according to claim 9, further comprising:
a monitoring module, configured to monitor a data backup operation.

11. The apparatus according to claim 10, wherein the backup apparatus communicates with the aircraft in a wireless manner, and the monitoring module is configured to:
monitor a pressing operation of a backup button in a wireless mode; or
receive a data backup request.

12. The apparatus according to claim 11, wherein the first data deletion module is configured to send an instruction for deleting the aerial photography data stored in the storage module to the aircraft.

13. The apparatus according to claim 10, wherein the monitoring module is configured to:
monitor an operation of inserting the storage module to a memory card slot of the backup apparatus, wherein the storage module is a memory card; and
the data obtaining module is configured to:
obtain the aerial photography data from the memory card; or
the monitoring module is configured to:
monitor an operation of connecting the backup apparatus and the aircraft by using a USB data line; and
the data obtaining module is configured to:
obtain the aerial photography data from the storage module of the aircraft by using the USB data line.

14. An aircraft aerial photography data backup apparatus, the apparatus being applied to an aircraft, and comprising:
a data sending module, configured to send aerial photography data in a storage module of the aircraft to the backup apparatus or a cloud server, so that the backup apparatus or the cloud server obtains and stores the aerial photography data; and
a second data deletion module, configured to delete the aerial photography data stored in the storage module.

15. The apparatus according to claim 14, wherein the second data deletion module comprises: an instruction receiving unit, configured to receive an instruction for deleting the aerial photography data stored in the storage module; and a data deletion unit, configured to delete the aerial photography data according to the instruction.

16. The apparatus according to claim 14, wherein the storage module is a memory card, and the data sending module is configured to:
send the aerial photography data in the memory card of the aircraft to the backup apparatus or the cloud server, so that the backup apparatus or the cloud server obtains and stores the aerial photography data; or
the data sending module is configured to:
send the aerial photography data in the storage module of the aircraft to the backup apparatus by using a USB data line, so that the backup apparatus obtains and stores the aerial photography data, wherein the USB data line connects the backup apparatus and the aircraft.

17. A computer readable storage medium, comprising an instruction used to perform the aircraft aerial photography data backup method according to any of claims 1 to 5.

18. A computer readable storage medium, comprising an instruction used to perform the aircraft aerial photography data backup method according to any of claims 6 to 8.

19. An aircraft aerial photography data backup device, comprising a processor, a memory and a bus system, wherein the processor is connected to the memory by using the bus system;
the memory is configured to store an instruction; and
the processor is configured to execute the instruction stored in the memory, and the instruction is used to perform the aircraft aerial photography data backup method according to any of claims 1 to 5.

20. An aircraft aerial photography data backup device, comprising a processor, a memory and a bus system, wherein the processor is connected to the memory by using the bus system;
the memory is configured to store an instruction; and
the processor is configured to execute the instruction stored in the memory, and the instruction is used to perform the aircraft aerial photography data backup method according to any of claims 6 to 8.
